# EUROPEAN PATENT APPLICATION

(11) **EP 1 981 254 A2**
(43) Date of publication of application: **15.10.2008**
(21) Application number: 08007000.6
(22) Date of filing: 08.04.2008
(51) Int. Cl.: H04M 1/725, H04N 7/14

(54) **Communication control device and communication terminal**

(30) Priority: 10.04.2007 JP 2007103031
(71) Applicant: NTT DoCoMo, Inc., Chiyoda-ku Tokyo 100-6150 (JP)
(72) Inventor: Kano, Izua c/o Intellectual Property Department, Tokyo 100-6150 (JP); Yamada, Kazuhiro c/o Intellectual Property Department, Tokyo 100-6150 (JP); Yamada, Eiju c/o Intellectual Property Department, Tokyo 100-6150 (JP); Onda, Yasushi c/o Intellectual Property Department, Tokyo 100-6150 (JP); Murakami, Keiichi c/o Intellectual Property Department, Tokyo 100-6150 (JP); Kamia, Dai c/o Intellectual Property Department, Tokyo 100-6150 (JP)
(74) Representative: HOFFMANN EITLE

(57) **Abstract**

Mobile communication terminal 10A sends position data of an avatar for the terminal 10A and position data of an avatar for mobile communication terminal 10B, with which a user of the terminal 10A wishes to communicate, to communication control device 24. Communication control device 24 determines whether a position indicated by each of the two pieces of position data is within a predetermined space. If communication control device 24 determines that positions indicated by the two pieces of position data are within the predetermined space, mobile communication terminals 10A and 10B start a videophone call using captured images, and otherwise, mobile communication terminals 10A and 10B start a videophone call using avatar images.

## Description

### Background

### Technical Field

The present invention relates to a technique for communication in which communication using text or voice is carried out together with exchange of images.

### Related Art

In recent years, use of high-performance mobile phones, by which non-voice communication is possible, has become widespread. For example, a mobile phone with a videophone function, by which an image of a face captured by a phonecam can be exchanged during voice communication, is widely used. Also used is a mobile phone, by which a character image can be displayed on a screen during voice communication(refer to JP-T-2004-537231 and JP-A1-2004-297350). By use of such mobile phones, communication is made more intimate and entertaining than voice-only communication.

However, since a conventional videophone function is available only when a telephone number of a destination is given, objects of communication tend to be limited to family members and friends. Also, a conventional videophone function has a problem that a face of a user is unconditionally exposed to a person unfamiliar to the user.

The present invention has been made in view of the above-described circumstances, and provides a mechanism that enables entertaining and secure communication, and promotes communication between users.

### Summary

The present invention provides a communication control device comprising: a first memory that stores specified space data indicating a space in a virtual space; a second memory configured to store one or more pieces of first image data ; and a processor configured to: receive first position data indicating a first position in the virtual space from a first communication terminal; if the first position indicated by the first position data is within the space indicated by the specified space data stored in the first memory, receive second image data, which is captured image data, from the first communication terminal, and send the second image data to a second communication terminal to allow the second communication terminal to display a second image on the basis of the second image data; and if the first position indicated by the first position data is not within the space indicated by the specified space data stored in the first memory, send first image data stored in the second memory to the second communication terminal to allow the second communication terminal to display a first image on the basis of the first image data.

In the communication control device, the processor may be further configured to: receive second position data indicating a second position in the virtual space from the second communication terminal; if the second position indicated by the second position data is within the space indicated by the specified space data, receive second image data from the second communication terminal and send the second image data to the first communication terminal to allow the first communication terminal to display a second image on the basis of the second image data; and if the second position indicated by the second position data is not within the space indicated by the specified space data, send first image data stored in the second memory to the first communication terminal to allow the first communication terminal to display a first image on the basis of the first image data.

In the communication control device, the processor may be further configured to: if the first position indicated by the first position data is within the space indicated by the specified space data stored in the first memory, send an instruction to the first communication terminal to send the second image data stored in the first communication terminal; and if the first position indicated by the first position data is not within the space indicated by the specified space data stored in the first memory, send an instruction to the first communication terminal to send the image data stored in the first communication terminal.

In the communication control device, the processor may be further configured to receive the image data from the first communication terminal.

In the communication control device, the second memory may be configured to store image data for each communication terminal.

In the communication control device, the second memory may be further configured to store one or more pieces of accessory image data representing an accessory image that is to be displayed together with a first image, and the processor may be further configured to send an accessory image data stored in the second memory to the second communication terminal to allow the second communication terminal to display an accessory image on the basis of the accessory image data, the accessory image being displayed together with the second image or the first image.

In the communication control device, the processor may be further configured to receive data from the first communication terminal, the data designating the second image data or the first image data as image data to be sent to the second communication terminal.

In the communication control device, the first image data may represent an avatar.

The present invention also provides a communication terminal comprising: an image capture unit configured to capture an image to generate first image data, which is captured image data; a memory that stores second image data; and a processor configured to: send position data indicating a position in a virtual space, the data being selected by a user; receive data indicating whether the position indicated by the position data is within a predetermined space; if the received data indicates that the position indicated by the position data is within a predetermined space, send the first image data generated by the image capture unit; and if the received data indicates that the position indicated by the position data is not within a predetermined space, send the second image data stored in the memory.

### Brief Description of the Drawings

Embodiments of the present invention will now be described in detail with reference to the following figures, wherein:
Fig. 1 is a diagram illustrating a configuration of a mobile communication system according to an embodiment of the present invention;
Fig. 2 is a block diagram illustrating a configuration of a communication control device;
Fig. 3 is a block diagram illustrating a configuration of a mobile communication terminal;
Fig. 4 is a diagram illustrating operation keys of a mobile communication terminal;
Fig. 5 is a diagram illustrating a logical configuration of units provided in a mobile communication terminal;
Figs. 6A and 6B are diagrams illustrating an example of an avatar image;
Fig. 7 is a flowchart of an operation carried out by a mobile communication terminal;
Fig. 8 is a diagram illustrating an image displayed on a mobile communication terminal;
Fig. 9 is a diagram illustrating an image displayed on a mobile communication terminal;
Fig. 10 is a sequence chart of an operation carried out by a mobile communication terminal and a communication control device;
Fig. 11 is a diagram illustrating an image displayed on a mobile communication terminal;
Fig. 12 is a diagram illustrating an image displayed on a mobile communication terminal; and
Fig. 13 is a diagram illustrating an image displayed on a mobile communication terminal.

### Detailed Description

An embodiment of the present invention will be described with reference to the drawings.

In the following description, voice communication during which an image is transferred is referred to as "a videophone call". An "image" in the definition includes a still image and a moving image; however, in the following embodiment, a moving image is used as an example of an image. A "moving image" includes a movie image captured by a camera such as a camcorder, or animation pictures that are manually created or computer-generated.

### [Configuration]

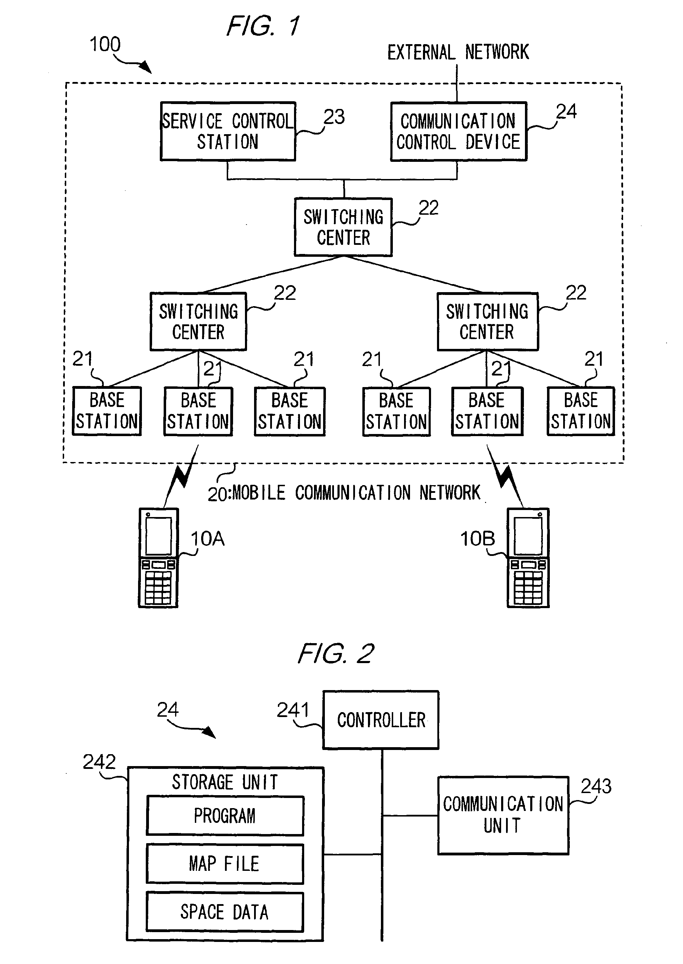

Fig. 1 is a schematic diagram illustrating a configuration of mobile communication system 100 according to an embodiment of the present invention. As shown in the drawing, mobile communication system 100 includes mobile communication terminals 10A and 10B and mobile communication network 20. Although in the drawing, for convenience of explanation, only two mobile communication terminals (source and destination mobile communication terminals) are shown, in reality a lot of mobile communication terminals can exist in mobile communication system 100. It is to be noted that in the following description mobile communication terminal 10A is assumed to be a source mobile communication terminal, namely a mobile communication terminal that originates a call, and mobile communication terminal 10B is assumed to be a destination mobile communication terminal, namely a mobile communication terminal that receives a call. It is also to be noted that mobile communication terminal 10A and mobile communication terminal 10B are referred to as "mobile communication terminal 10", except where it is necessary to specify otherwise.

Mobile communication network 20 is a network for providing mobile communication terminal 10 with a mobile communication service, and operated by a carrier. Mobile communication network 20 combines and sends voice data, image data, and control data in accordance with a predetermined protocol. For example, 3G-324M standardized by 3GPP (3rd Generation Partnership Project) is preferable as such a protocol.

Mobile communication network 20 includes a line-switching communication network and a packet-switching communication network; accordingly, mobile communication network 20 includes plural nodes such as base stations 21 and switching centers 22 adapted to each system. A base station 21 forms a wireless communication area with a predetermined range, and carries out a wireless communication with mobile communication terminal 10 located in the area. Switching center 22 communicates with base station 21 or another switching center 22, and performs a switching operation.

Mobile communication network 20 also includes service control station 23 and communication control device 24. Service control station 23 is provided with a storage device storing contract data and billing data of subscribers (users of mobile communication terminals 10), and maintains a communication history of each mobile communication terminal 10. Service control station 23 also maintains telephone numbers of mobile communication terminals 10. Communication control device 24 is a computer that communicates with switching center 22 and enables communication between mobile communication terminals 10. Communication control device 24 is connected to an external network such as the Internet, and enables communication between the external network and mobile communication network 20 through a protocol conversion.

Fig. 2 is a block diagram illustrating a configuration of communication control device 24. As shown in the drawing, communication control device 24 includes controller 241, storage unit 242, and communication unit 243. Controller 241 includes a CPU (Central Processing Unit), a ROM (Read Only Memory), and a RAM (Random Access Memory). The CPU executes a program stored in the ROM or storage unit 242 while using the RAM as a work area, thereby controlling components of communication control device 24. Storage unit 242 is, for example, an HDD (Hard Disk Drive). Storage unit 242 stores, in addition to programs to be executed by controller 241, data to be used to enable communication between mobile communication terminals 10. Communication unit 243 is an interface for carrying out communication using mobile communication network 20 or an external network.

Now, data stored in storage unit 242 will be described.

Storage unit 242 stores a map file and space data. The map file contains data of a virtual three-dimensional space (hereinafter referred to as "virtual space") consisting of plural pieces of object data, plural pieces of location data, and plural pieces of path data. Object data is data of an object such as a building or a road, that exists in the virtual space. Specifically, object data is polygon data that defines an external appearance of an object such as a shape or a color. An object data of a building may also define an inward part of the building. Location data is data represented in a predetermined coordinate system, and defines a location in the virtual space. In the present embodiment a rectangular coordinate system is employed in which a location is indicated by coordinates of x-axis, y-axis, and z-axis that run at right angles to one another. Path data is data defining a space that can be used as a path for an avatar (described later) in the virtual space. A space defined by path data is, for example, a road.

A location of an object represented by object data is indicated by location data. Namely, an object is associated with a particular location represented by location data.

An object represented by object data is a still object, which is an object whose location in the virtual space is fixed, not a moving object such as an avatar.

Space data is data indicating a space occupied in the virtual space. The space is hereinafter referred to as "specified space". A specified space may be a space occupied by a building in the virtual space or a space specified regardless of objects of the virtual space. Space data is represented in a predetermined coordinate system as in the case of location data. If space data is indicated by eight coordinates corresponding to eight vertices of a rectangular parallelepiped, a space contained in the rectangular parallelepiped is a specified space indicated by the space data. In the virtual space, plural specified spaces may exist.

A specified space can be recognized by a user of mobile communication terminal 10. For example, a specified space may be recognized on the basis of a predetermined object provided in the specified space, such as a building or a sign. Alternatively, a specified space may be recognized on the basis of its appearance, such as color, that is differentiated from that of another space.

Now, mobile communication terminal 10 will be described.

Mobile communication terminal 10 is a mobile phone which is capable of voice and data communication with another mobile communication terminal 10 using mobile communication network 20. Mobile communication terminal 10 has a videophone function by which captured images can be exchanged during voice communication. Mobile communication terminal 10 is able to display a virtual space managed by communication control device 24, control an avatar in the virtual space, and realize communication with a user of another avatar in the virtual space.

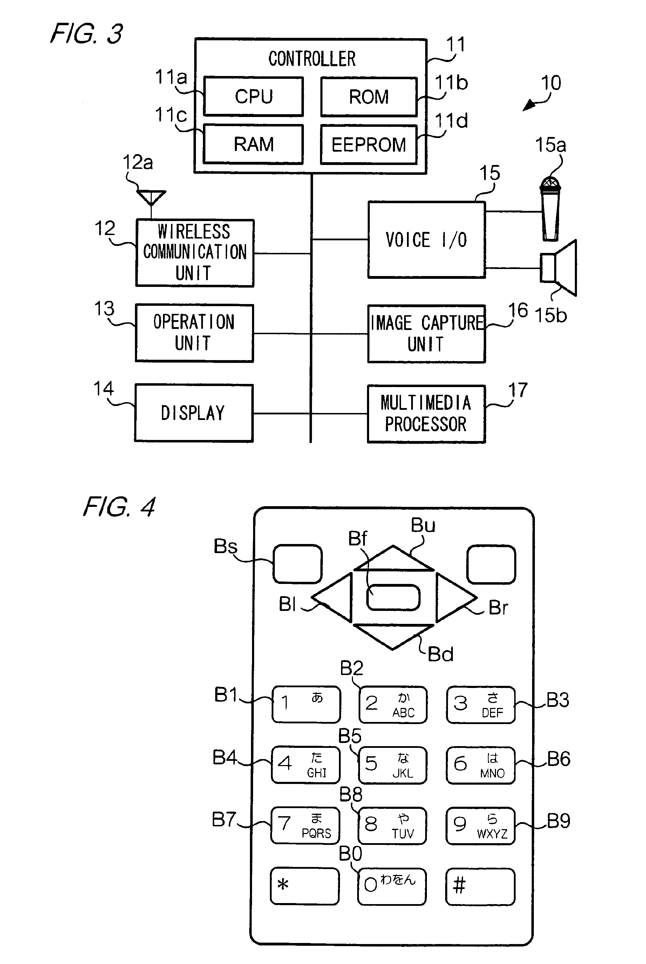

Fig. 3 is a block diagram illustrating a configuration of mobile communication terminal 10. As shown in the drawing, mobile communication terminal 10 includes controller 11, wireless communication unit 12, operation unit 13, display 14, voice I/O 15, image capture unit 16, and multimedia processor 17. Controller 11 includes CPU 11a, ROM 11b, RAM 11c, and EEPROM (Electronically Erasable and Programmable ROM) 11d. CPU 11a executes a program stored in ROM 11b or EEPROM 11d while using RAM 11c as a work area, thereby controlling components of mobile communication terminal 10.

Wireless communication unit 12 has antenna 12a, and wirelessly communicates data with mobile communication network 20. Operation unit 13 has keys, and provides controller 11 with an operation signal corresponding to an operation by a user. Display 14 has a liquid crystal panel and a liquid crystal drive circuit, and displays information under the control of controller 11. Voice I/O 15 has microphone 15a and speaker 15b, and inputs or outputs voice signals.

Image capture unit 16 has a camera function. Image capture unit 16 has a CMOS (Complementary Metal Oxide Semiconductor) image sensor and a signal processing circuit, and generates image data of a photographed subject. The image sensor of image capture unit 16 is arranged near the liquid crystal panel of display 14 so that a user is able to photograph himself/herself while looking at the liquid crystal panel. Display 14 serves as a viewfinder when an image is captured

Multimedia processor 17 has an LSI (Large Scale Integration) for processing data exchanged via wireless communication unit 12, and performs an encoding or decoding process relative to voice signals or image data and a multiplexing or separating process relative to voice signals or image data. Multimedia processor 17 also generates moving image data (hereinafter referred to as "captured image data") on the basis of image data generated by image capture unit 16. In the present embodiment, AMR (Adaptive Multi Rate) is used for encoding or decoding voice signals, and MPEG (Moving Picture Experts Group) -4 is used for encoding or decoding image data. However, another encoding/decoding scheme may be used in the present embodiment.

Now, keys of operation unit 13 will be described with reference to Fig. 4.

As shown in the drawing, operation unit 13 has soft key Bs, cursor move keys Bu, Bd, Bl, and Br, confirmation key Bf, and numeric keys B 1 to B0. Soft key Bs is a key to which a function is allotted depending on a screen displayed on display 14. A function allotted to soft key Bs may be a function for selecting a destination of a communication, which is described in detail later. Cursor move keys Bu, Bd, B1, and Br are keys for moving an object such as an avatar or a pointer from front to back (or up and down) and from side to side. Confirmation key Bf is a key for selecting an object displayed on display 14 or confirming a selected object. Numeric keys B1 to B0 are keys for inputting characters and figures.

Now, data stored in mobile communication terminal 10 will be described.

ROM 11b pre-stores some programs (hereinafter referred to as "preinstalled programs"). The preinstalled programs are specifically a multitasking operating system (hereinafter referred to as "multitasking OS"), a Java (Registered Trademark) platform, and native application programs. The multitasking OS is an operating system supporting functions such as allocation of virtual memory spaces, which are necessary to realize a pseudo-parallel execution of plural tasks using a TSS (Time-Sharing System). The Java platform is a bundle of programs that are described in accordance with a CDC (Connected Device Configuration) which is a configuration for providing Java execution environment 114 (described later) in a mobile device with a multitasking OS. Native application programs are programs for providing mobile communication terminal 10 with basic functions such as voice and data communication or shooting with camera.

EEPROM 11d has a Java application program storage area for storing Java application programs. A Java application program consists of: a JAR (Java ARchive) file including a main program that are instructions executed under Java execution environment 114, and image files and audio files used when the main program is running; and an ADF (Application Descriptor File) in which information on installation and execution of the main program and attribute information of the main program are described. A Java application program is created and stored in a server on a network by a content provider or a carrier, and in response to a request from mobile communication terminal 10, sent to mobile communication terminal 10 from the server.

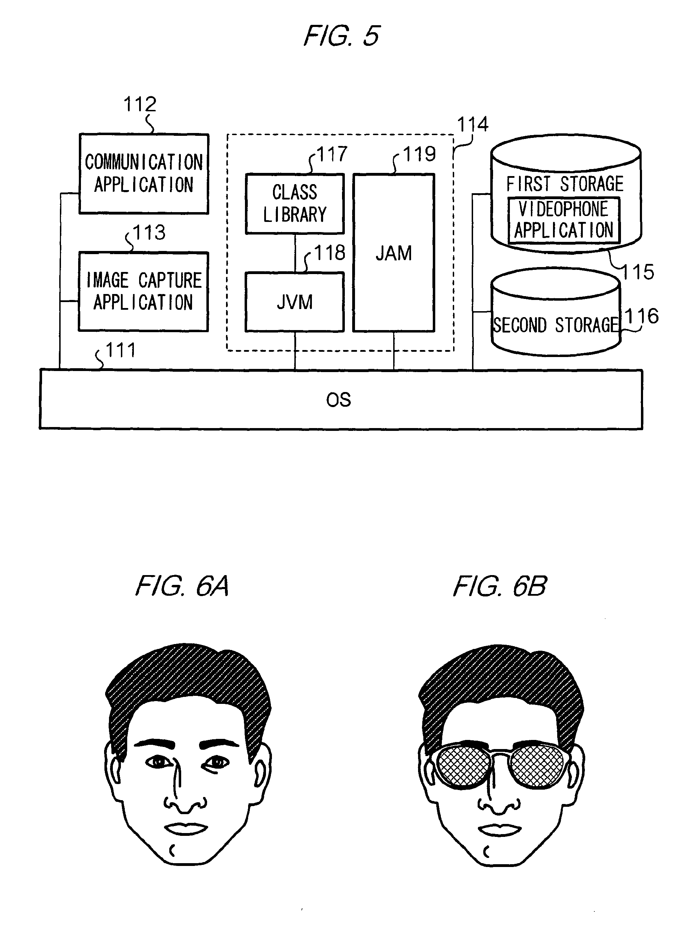

Fig. 5 is a diagram illustrating a logical configuration of units provided in mobile communication terminal 10 through execution of programs stored in ROM 11b and EEPROM 11d. As shown in the drawing, in mobile communication terminal 10, communication application 112, image capture application 113, and Java execution environment 114 are provided on OS 111. In EEPROM 11d, first storage 115 and second storage 116 are secured. Communication application 112 and image capture application 113 are provided by execution of native application programs stored in ROM 11b, and communication application 112 establishes communication with mobile communication network 20, and image capture application 113 captures an image using image capture unit 16.

Java execution environment 114 is provided through execution of Java platform stored in ROM 11b. Java execution environment 114 includes class library 117, JVM (Java Virtual Machine) 118, and JAM (Java Application Manager) 119. Class library 117 is a collection of program modules (classes) that provide a particular function. JVM 118 provides a Java execution environment optimized for a CDC, and provides a function of interpreting and executing bytecode provided as a Java application program. JAM 119 provides a function of managing download, installation, execution, or termination of a Java application program.

First storage 115 is a storage for storing Java application programs (JAR files and ADFs) downloaded under the control of JAM 119. Second storage 116 is a storage for storing data that is generated during execution of a Java application program, after the program is terminated. A storage area of second storage 116 is assigned to each of installed Java application programs. Data of a storage area assigned to a Java application program can be rewritten during execution of the program, and cannot be rewritten during execution of another Java application program.

Java application programs that can be stored in mobile communication terminal 10 include an application program used for displaying a virtual space in which an avatar moves around and for performing voice and data communication with another mobile communication terminal 10. The application program is hereinafter referred to as "videophone application program". In the following description, it is assumed that a videophone application program is pre-stored in mobile communication terminal 10.

EEPROM 11d stores image data that is used during execution of a videophone application program. Specifically, EEPROM 11d stores avatar image data representing an image of an avatar and accessory image data representing an image of an accessory to be attached to an avatar. In the following description, an image represented by avatar image data is referred to as "avatar image", and an image represented by accessory data is referred to as "accessory image".

Avatar image data is a collection of pieces of two-dimensional image data that represent an image of the appearance of a user of mobile communication terminal 10. Avatar image data includes plural pieces of image data that show different actions or different facial expression of an avatar. Controller 11 switches between the plural pieces of image data in succession, thereby causing display 14 to display an animation of an avatar. Fig. 6A is a diagram illustrating an example of an avatar image. In the drawing, only a face of an avatar is shown.

Accessory image data is image data representing an accessory image displayed together with an avatar image. An accessory image is, for example, an image of sunglasses or an image of a hat. Fig. 6B is a diagram illustrating an avatar image shown in Fig. 6A on which an accessory image of sunglasses is laid. An accessory image can be laid on a predetermined position of an avatar image. EEPROM 11d may store plural pieces of accessory image data, and a user may select accessory image data of an accessory image to be laid on an avatar image.

### [Operation]

Operations of mobile communication terminal 10 and communication control device 24 in mobile communication system 100 will be described. Specifically, first, an operation of mobile communication terminal 10 running a videophone application program will be described, and second, operations of mobile communication terminals 10A and 10B and communication control device 24, that are performed when voice communication is made between mobile communication terminals 10A and 10B, will be described. In the following description, it is assumed that a videophone application program is running in plural mobile communication terminals 10 including mobile communication terminal 10B, and that plural avatars exist in a virtual space.

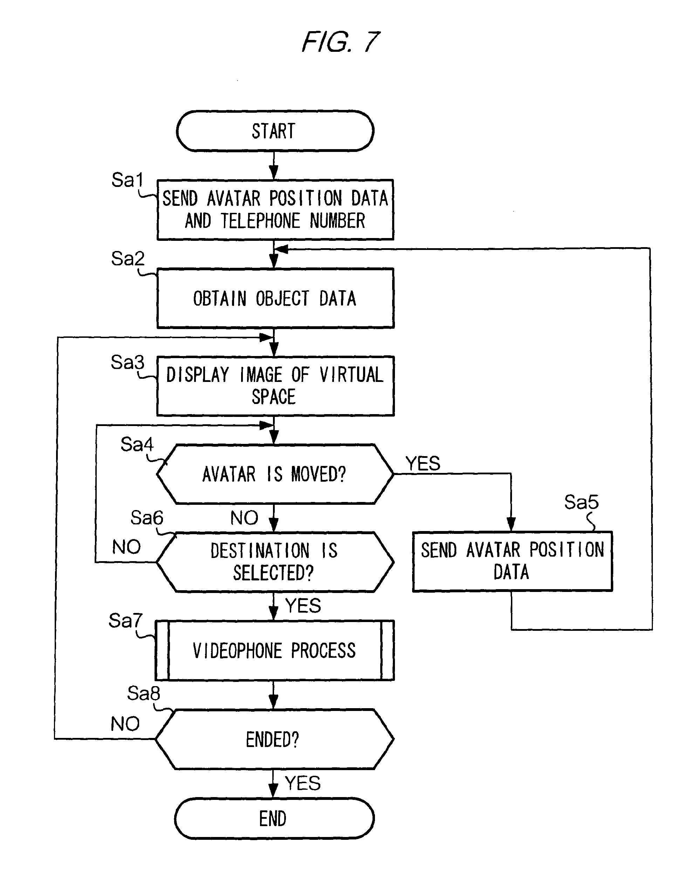

Fig. 7 is a flowchart of an operation of mobile communication terminal 10A running a videophone application program. The videophone application program is executed when a user carries out a predetermined operation. After the videophone application program is executed, controller 11 of mobile communication terminal 10A sends data of a position in a virtual space and data of a telephone number of mobile communication terminal 10A to communication control device 24 (step Sa1). The data of a position in a virtual space is hereinafter referred to as "avatar position data". Avatar position data is coordinates of a point in a virtual space in which an avatar is to be positioned. Avatar position data may be freely determined, and may be, for example, a predetermined position or a position in which an avatar was positioned when a videophone application program was previously terminated.

On receipt of the avatar position data sent from mobile communication terminal 10, controller 241 of communication control device 24 identifies object data on the basis of the avatar position data and a map file stored in storage unit 242. Specifically, controller 241 identifies object data of an object located within a predetermined range from a position indicated by the avatar position data. The predetermined range may be a range that fits within a screen of display 14 of mobile communication terminal 10 or a range that is wider than that. After object data is identified, controller 241 sends the object data to mobile communication terminal 10A. When doing so, if an avatar of another user exists in the predetermined range, controller 241 also sends image data of the avatar and avatar position data of the avatar. On receipt of the object data sent from communication control device 24 (step Sa2), controller 11 of mobile communication terminal 10A causes display 14 to display an image of a virtual space (step Sa3).

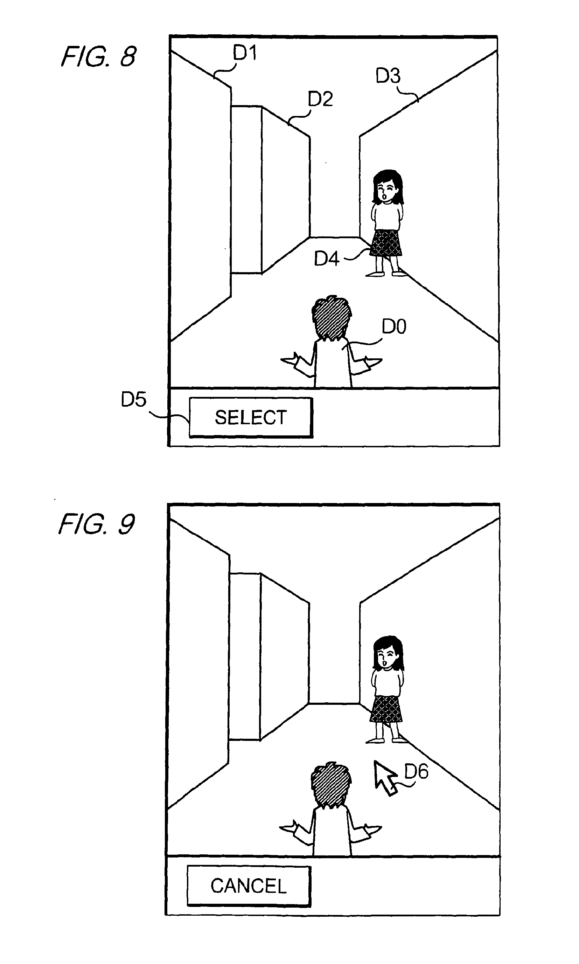

Fig. 8 is a diagram illustrating an example of the image displayed on display 14. The image shows a part of a virtual space and avatars as seen from behind an avatar of a user. In the drawing, image D0 is an avatar image of a user, which shows the back of the avatar. Images D1, D2, and D3 show buildings, and a space surrounded by the buildings is a road. Image D4 is an avatar image of another user, and an avatar shown by the avatar image moves regardless of an operation of a user of mobile communication terminal 10A. An avatar can be moved only in a space defined by path data. Image D5 shows a function allotted to soft key Bs.

After an image of a virtual space is displayed, if a user presses cursor move key Bu, Bd, Bl, or Br, controller 11 causes display 14 to display images of an avatar of the user moving in the virtual space. For example, if a user presses cursor move key Bu when an image shown by Fig. 8 is displayed, an avatar of the user moves ahead. Alternatively, if a user presses soft key Bs in the same situation, controller 11 causes display 14 to display a pointer so that the user can select an avatar of another user with which the user wishes to communicate. If a user presses soft key Bs when a pointer is displayed, controller 11 causes display 14 to hide the pointer, and awaits an instruction to move an avatar of the user.

Fig. 9 is a diagram illustrating an image in which a pointer is displayed on display 14. In the drawing, image D6 of an arrow shows a pointer. If a user presses cursor move key Bu, Bd, Bl, or Br when a pointer is displayed as shown in the drawing, controller 11 causes display 14 to display images of the pointer moving. Cursor move keys Bu, Bd, Bl, and Br, if a pointer is not displayed, function as operation keys for moving an avatar, and if a pointer is displayed, function as operation keys for moving the pointer. If a user presses confirmation key Bf when a pointer is on an avatar image of another user, controller 11 sends a request to communication control device 24 to communicate with a mobile communication terminal of the other user by a videophone call.

Now, returning to explanation of Fig. 7, after an image of a virtual space at step Sa3, controller 11 determines whether it has received an instruction from a user to move an avatar (step Sa4). Specifically, controller 11 determines whether it has received an operation signal indicating that cursor move key Bu, Bd, B1, or Br had been pressed. Controller 11 repeats the determination, and if it receives an instruction from a user to move an avatar (step Sa4: YES), sends avatar position data indicating a position to which the avatar is moved, to communication control device 24 (step Sa5), and receives object data corresponding to the avatar position data from communication control device 24 (step Sa2). Controller 11 repeats the operation of steps Sa1 to Sa5 while an avatar is moved by a user.

On the other hand, if controller 11 does not receive an instruction from a user to move an avatar (step Sa4: NO), the controller determines whether it has received an instruction from a user to select a destination of communication (step Sa6). Specifically, controller 11 determines whether it has received an operation signal indicating that confirmation key Bf had been pressed while a pointer is on an avatar image of another user. If the determination is negative (step Sa6: NO), controller 11 again makes a judgment of step Sa4, and if the determination is affirmative (step Sa6: YES), controller 11 carries out an operation for initiating a videophone call (step Sa7). The operation is hereinafter referred to as "videophone operation" and described in detail later. After that, controller 11 determines whether it has received an instruction from a user to terminate a videophone call (step Sa8), and if the determination is affirmative (step Sa8: YES), controller 11 terminates execution of a videophone application program, and if the determination is negative (step Sa8: NO), controller 11 again causes display 14 to display an image of the virtual space (step Sa3).

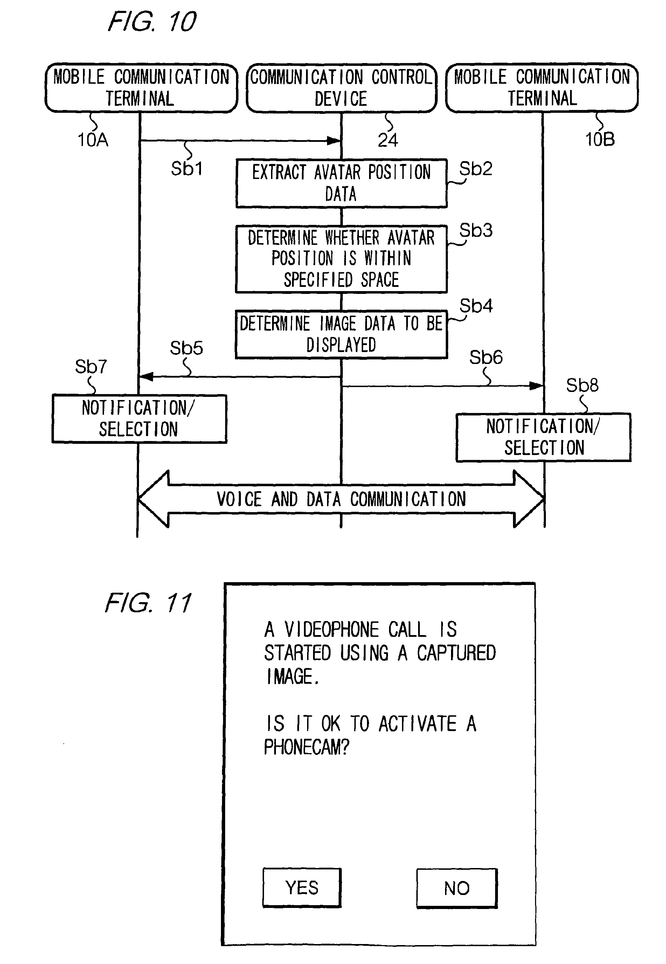

Now, a videophone operation of step Sa7 will be described. The operation will be described along with an operation of communication control device 24 and an operation of mobile communication terminal 10B with which mobile communication terminal 10A communicates, with reference to Fig. 10. Fig. 10 is a sequence chart of operations of mobile communication terminals 10A and 10B and communication control device 24.

Controller 11 of mobile communication terminal 10A sends a request for a videophone call to communication control device 24 (step Sb1). The request includes avatar position data of a user of mobile communication terminal 10A and avatar position data of a user of mobile communication terminal 10B.

On receipt of the request via communication unit 243, controller 241 of communication control device 24 extracts the two pieces of avatar position data from the request (step Sb2). Controller 241 compares each of the two pieces of avatar position data with space data stored in storage unit 242 to determine whether a position indicated by each piece of data is within a specified space indicated by the space data (step Sb3).

Controller 241 determines, on the basis of the determination of step Sb3, images to be displayed on mobile communication terminals 10A and 10B during a videophone call (step Sb4). If positions indicated by the two pieces of avatar position data are within a specified space indicated by the space data, controller 241 makes a determination to use captured image data of mobile communication terminals 10A and 10B as image data to be displayed on mobile communication terminals 10A and 10B during a videophone call. On the other hand, if either of the two pieces of avatar position data is not within a specified space indicated by the space data, controller 241 makes a determination to use avatar image data of mobile communication terminals 10A and 10B as image data to be displayed on mobile communication terminals 10A and 10B during a videophone call.

Controller 241 sends to mobile communication terminals 10A and 10B data that is determined on the basis of the determination of step Sb4, and indicates image data to be sent to communication control device 24 (steps Sb5 and Sb6). The data is data indicating whether the two pieces of avatar position data sent from mobile communication terminal 10A are within a specified space indicated by the space data stored in storage unit 242. In other words, the data is data indicating image data, among captured image data and avatar image data, to be sent to communication control device 24. If positions indicated by the two pieces of avatar position data sent from mobile communication terminal 10A are within a specified space indicated by the space data stored in storage unit 242, controller 241 instructs mobile communication terminals 10A and 10B to send captured image data stored in each terminal, and otherwise, controller 241 instructs mobile communication terminals 10A and 10B to send avatar image data stored in each terminal. When doing so, controller 241 also carries out an operation for enabling voice and data communication between mobile communication terminals 10A and 10B, such as reserving a communication line.

On receipt of the data indicating image data to be sent to communication control device 24, via wireless communication unit 12, controller 11 of mobile communication terminal 10A causes display 14 to display a message corresponding to the data (step Sb7). The same operation is carried out in mobile communication terminal 10B by controller 11 of the terminal (step Sb8).

Fig. 11 is a diagram illustrating an image displayed on display 14 when an instruction to send captured image data is received. As shown in the drawing, if an instruction to send captured image data is received, controller 11 causes display 14 to display a screen showing a message that a videophone call using a captured image is started and asking a user whether to start image capture application 113. If a user select a "YES" button on the screen, controller 11 starts image capture application 113 and configures mobile communication terminal 10A to perform a videophone call, and if a user selects a "NO" button on the screen, controller 11 configures mobile communication terminal 10A to perform a videophone call without starting image capture application 113, and sends avatar image data instead of captured image data.

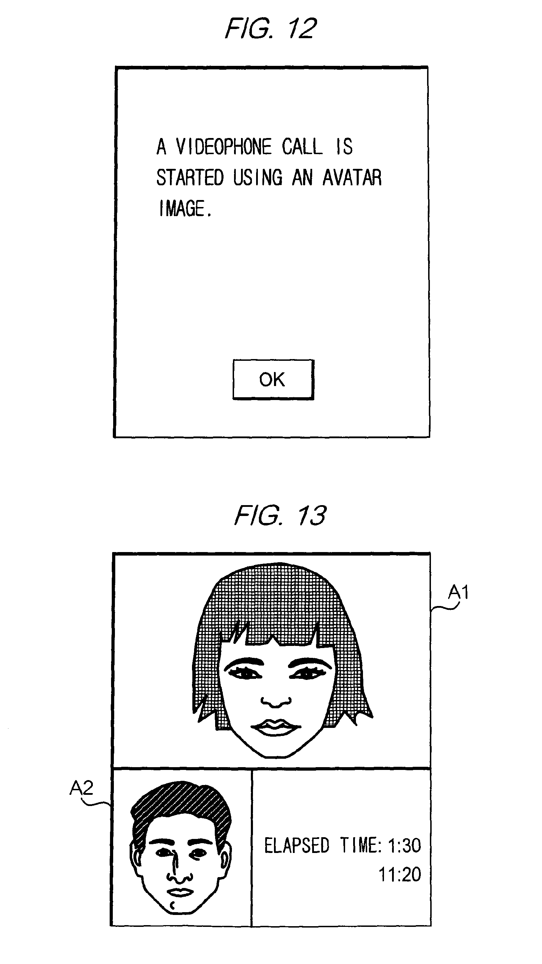

Fig. 12 is a diagram illustrating an image displayed on display 14 when an instruction to send avatar image data is received. As shown in the drawing, if an instruction to send avatar image data is received, controller 11 causes display 14 to display a screen with a message that a videophone call using an avatar image is started. If a user selects an "OK" button on the screen, controller 11 configures mobile communication terminal 10 to perform a videophone call using an avatar image. If a user has selected an accessory image to be laid on an avatar image, controller 11 sends an avatar image on which an accessory image is laid.

After a selection is made by each user of mobile communication terminals 10A and 10B, voice and data communication between mobile communication terminals 10A and 10B becomes enabled. Controllers 11 of mobile communication terminals 10A and 10B cause displays 14 to display an image shown in Fig. 13. In Fig. 13, area A1 is an area in which a captured image or an avatar image sent from a destination terminal (for mobile communication terminal 10A, a captured image or an avatar image sent from mobile communication terminal 10B) is displayed, and area A2 is an area in which a captured image or an avatar image of a user of a source terminal is displayed.

An image displayed in area A2 of display 14 of mobile communication terminal 10 is displayed in area A1 of display 14 of mobile communication terminal 10B, though resolution and frame rate at which an image is displayed may be different. If a user has selected accessory image data to be associated with avatar image data, an accessory image is laid on an avatar image shown in area A2. An accessory image may be laid on a captured image displayed in area A2. For example, if an accessory image of sunglasses has been selected by a user and is displayed in area A2, a user positions himself/herself so that the accessory image of sunglasses overlaps his/her eyes, and captures an image of the moment using image capture unit 16. Image data of the image generated by image capture unit 16 is processed by multimedia processor 17 to generate captured image data representing the captured image on which the accessory image of sunglasses is laid.

As described above, in mobile communication system 100 according to the present embodiment, a user of mobile communication terminal 10 is able to move around a virtual space using an avatar, and make a videophone call to a person that the user met in the virtual space. In addition, a user of mobile communication terminal 10 is able to make a videophone call to a person, if the user does not know a telephone number of the person. Accordingly, promotion of use of a videophone can be expected.

Also, in mobile communication system 100 according to the present embodiment, only when avatars for both source mobile communication terminal 10A and destination mobile communication terminal 10B are located within a specified space, a captured image is displayed during a videophone call, and otherwise, an avatar image is displayed during a videophone call. In addition, the specified space can be recognized by a user of mobile communication terminal 10. Accordingly, it is avoided that a captured image of a user of mobile communication terminal 10 is unexpectedly exposed to another user.

Also, in mobile communication system 100 according to the present embodiment, a user of mobile communication terminal 10 is able to select an accessory image to be laid on a captured image. Accordingly, a videophone call using a captured image is made more entertaining, and privacy of a user can be protected by covering of a part of a captured image with an accessory image.

Also, in mobile communication system 100 according to the present embodiment, a user of mobile communication terminal 10 may make a videophone call using an avatar image at first, and after becoming intimate with a communication partner, make a videophone call using a captured image. Accordingly, reluctance by a user to take part in a videophone call is reduced.

### [Modifications]

The above embodiment of the present invention may be modified as described below.

### (1) Modification 1

In the above embodiment, where an image to be displayed during a videophone call is selected in a source mobile communication terminal, the image may be selected in a communication control device. Specifically, a source mobile communication terminal may send both avatar image data and captured image data to a communication control device, and the communication control device may select and send one of the two pieces of image data to a destination mobile communication terminal. When selecting image data, a communication control device may make the selection on the basis of space data, and delete one of two pieces of image data. Alternatively, a communication control device may send both avatar image data and captured image data to a destination mobile communication terminal, and designate image data to be used in the destination mobile communication terminal. The destination mobile communication terminal uses, from among received pieces of image data, the designated image data.

Alternatively, a source mobile communication terminal may always send captured image data to a communication control device, and the communication control device, which stores avatar image data, may select one of the captured image data and the avatar image data as image data to be displayed during a videophone call. To realize the modification, a communication control device needs to have avatar image data in a storage unit and have a multimedia processor that mobile communication terminal 10 has.

A controller of a communication control device, which has avatar image data in a storage unit and has a multimedia processor, receives voice data and captured image data which have been combined, and separates the combined data into individual data. The controller of the communication control device, if at least either of avatars for a source mobile communication terminal and a destination mobile communication terminal is not within a specified space, replaces the captured image data with the avatar image data stored in the storage unit, and sends it to the source mobile communication terminal in combination with the received voice data.

### (2) Modification 2

In the above embodiment, a mobile communication terminal stores avatar image data and sends it to a communication control device, a communication control device may store pieces of avatar image data and receive data for identifying avatar image data from a mobile communication terminal. A communication control device may also store pieces of accessory image data receive data for identifying accessory image data from a mobile communication terminal. According to the present modification, it is possible to reduce the amount of data transmitted from a mobile communication terminal to a communication control device. To realize the modification, a communication control device needs to store avatar image data and have a multimedia processor that a mobile communication terminal has. If a communication control device stores accessory image data, the communication control device needs to carry out an operation of laying an accessory image on a captured image.

Alternatively, a destination mobile communication terminal may store pieces of avatar image data and receive data for identifying avatar image data from a source mobile communication terminal. In this case, a source mobile communication terminal sends data for identifying avatar image data to a communication control device, the communication control device transfers the data to a destination mobile communication terminal, and the destination mobile communication terminal determines avatar image data to be used on the basis of the received data.

### (3) Modification 3

In the above embodiment, where users of mobile communication terminals 10 communicate with each other by videophone, namely using voice and images, users may use text instead of voice to chat. In this case, an avatar image shown in a virtual space may be switched to a captured image, if an avatar represented by the avatar image is located in a specified space.

### (4) Modification 4

In the above embodiment, where if both of avatars for source and destination mobile communication terminals are located within a specified space, a captured image is displayed, and otherwise, an avatar image is displayed; a captured image may be displayed when one of avatars for source and destination mobile communication terminals is located within a specified space.

Specifically, if an avatar for a source mobile communication terminal is located within a specified space, and an avatar for a destination mobile communication terminal is not located within the specified space, a captured image for the source mobile communication terminal may be displayed on the destination mobile communication terminal, and an avatar image for the destination mobile communication terminal may be displayed on the source mobile communication terminal. On the contrary, if an avatar for a source mobile communication terminal is not located within a specified space, and an avatar for a destination mobile communication terminal is located within the specified space, an avatar image for the source mobile communication terminal may be displayed on the destination mobile communication terminal, and a captured image for the destination mobile communication terminal may be displayed on the source mobile communication terminal.

### (5) Modification 5

In the above embodiment, if both of avatars for source and destination mobile communication terminals are located within a specified space, a captured image is displayed; conversely, if avatars for source and destination mobile communication terminals are not located within a specified space, a captured image may be displayed. A specified space may be set as a space in which a display of a captured image is allowed, or may be set as a space in which a display of a captured image is not allowed.

### (6) Modification 6

In the above embodiment, a specified space may be associated with a service provider that provides a service in a virtual space. A service provided by a service provider includes an online shopping service provided through a virtual shop in a virtual space, and an SNS (Social Networking Service) using a virtual space. In addition, a user of mobile communication terminal 10 may make a service contract with a service provider. In this case, a videophone call using captured images may be allowed, if users of source and destination mobile communication terminals have a service contract with a service provider, and avatars of the users are located within a specified space associated with the service provider, and otherwise, a videophone call using avatar images may be made. A fact that a service contract has been made with a service provider may be authenticated when a user logs into a virtual space, and data indicating whether a service contact has been made with a service provider may be stored in a mobile communication terminal, a communication control device, or an external database.

### (7) Modification 7

In the above embodiment, where a user of mobile communication terminal 10 specifies a destination for communication by selecting an avatar shown in a virtual space with a pointer, a user may specify a destination for communication by starting an address book application and selecting a telephone number registered in the address book. In this case, if an avatar for a destination mobile communication terminal does not exist in a virtual space, an avatar image may be displayed on both a source mobile communication terminal and the destination mobile communication terminal during a videophone call. Alternatively, a captured image only for a source mobile communication terminal may be displayed on a destination mobile communication terminal.

### (8) Modification 8

In the above embodiment, functions of communication control device 24 may be served by switching center 22 or another node in mobile communication network 20.

### (9) Modification 9

In the above, embodiment, where mobile communication terminal 10 is a mobile phone, mobile communication terminal 10 may be another communication terminal such as a PDA (Personal Digital Assistance) or a personal computer. Also, a communication network used by mobile communication terminal 10 may be, instead of a mobile communication terminal, another network such as the Internet. Also, an image capture unit, a microphone, and a speaker of mobile communication terminal 10 may be not built-in, but external.

### (10) Modification 10

In step Sb2 of the above embodiment, where communication control device 24 receives from source mobile communication terminal 10A, avatar position data of a user of the terminal and avatar position data of a user of destination mobile communication terminal 10B, communication control device 24 may receive avatar position data of a user of mobile communication terminal 10A from mobile communication terminal 10A, and receive avatar position data of a user of mobile communication terminal 10B from mobile communication terminal 10B.

### (11) Modification 11

In the step Sa1 of the above embodiment, where mobile communication terminal 10A sends data of a telephone number of the terminal to communication control device 24, mobile communication terminal 10A may send other data on the basis of which a telephone number of the terminal is identified to communication control device 24. In this case, the data may be used for communication control device 24 to obtain a telephone number from a service control station.

### (12) Modification 12

A program executed in communication control device 24 in the above embodiment may be provided via a recording medium or a network such as the Internet.

## Claims

1. A communication control device comprising:
a first memory that stores specified space data indicating a space in a virtual space;
a second memory configured to store one or more pieces of first image data; and
a processor configured to:
receive first position data indicating a first position in the virtual space from a first communication terminal;
if the first position indicated by the first position data is within the space indicated by the specified space data stored in the first memory, receive second image data, which is captured image data, from the first communication terminal, and send the second image data to a second communication terminal to allow the second communication terminal to display a second image on the basis of the second image data; and
if the first position indicated by the first position data is not within the space indicated by the specified space data stored in the first memory, send first image data stored in the second memory to the second communication terminal to allow the second communication terminal to display a first image on the basis of the first image data.

2. The communication control device according to Claim 1, wherein the processor is further configured to:
receive second position data indicating a second position in the virtual space from the second communication terminal;
if the second position indicated by the second position data is within the space indicated by the specified space data, receive second image data from the second communication terminal and send the second image data to the first communication terminal to allow the first communication terminal to display a second image on the basis of the second image data; and
if the second position indicated by the second position data is not within the space indicated by the specified space data, send first image data stored in the second memory to the first communication terminal to allow the first communication terminal to display a first image on the basis of the first image data.

3. The communication control device according to Claim 1, wherein the processor is further configured to:
if the first position indicated by the first position data is within the space indicated by the specified space data stored in the first memory, send an instruction to the first communication terminal to send the second image data stored in the first communication terminal; and
if the first position indicated by the first position data is not within the space indicated by the specified space data stored in the first memory, send an instruction to the first communication terminal to send the image data stored in the first communication terminal.

4. The communication control device according to Claim 1, wherein the processor is further configured to receive the image data from the first communication terminal.

5. The communication control device according to Claim 1, wherein the second memory is configured to store image data for each communication terminal.

6. The communication control device according to Claim 1, wherein:
the second memory is further configured to store one or more pieces of accessory image data representing an accessory image that is to be displayed together with a first image; and
the processor is further configured to send an accessory image data stored in the second memory to the second communication terminal to allow the second communication terminal to display an accessory image on the basis of the accessory image data, the accessory image being displayed together with the second image or the first image.

7. The communication control device according to Claim 1, wherein the processor is further configured to receive data from the first communication terminal, the data designating the second image data or the first image data as image data to be sent to the second communication terminal.

8. The communication control device according to Claim 1, wherein the first image data represents an avatar.

9. A communication terminal comprising:
an image capture unit configured to capture an image to generate first image data, which is captured image data;
a memory that stores second image data; and
a processor configured to:
send position data indicating a position in a virtual space, the data being selected by a user;
receive data indicating whether the position indicated by the position data is within a predetermined space;
if the received data indicates that the position indicated by the position data is within a predetermined space, send the first image data generated by the image capture unit; and
if the received data indicates that the position indicated by the position data is not within a predetermined space, send the second image data stored in the memory.
